**Europäisches Patentamt**

**European Patent Office**

**Office européen des brevets**

(19)

(11) Numéro de publication : **0 039 634**
**B1**

(12)

# FASCICULE DE BREVET EUROPÉEN

(45) Date de publication du fascicule du brevet :
07.11.84

(21) Numéro de dépôt : 81400661.5

(22) Date de dépôt : 28.04.81

(51) Int. Cl.³ : **G 01 L   9/10**

(54) **Capteur de pression absolue, notamment pour la mesure de la pression à l'admission des moteurs à combustion interne.**

(30) Priorité : 07.05.80 FR 8010172

(43) Date de publication de la demande :
11.11.81 Bulletin 81/45

(45) Mention de la délivrance du brevet :
07.11.84 Bulletin 84/45

(84) Etats contractants désignés :
**BE DE GB IT NL SE**

(56) Documents cités :
**CH-A-   394 659**
**DE-A- 2 617 576**
**FR-A- 2 377 614**
**FR-A- 2 394 075**
**US-A- 3 800 258**
**US-A- 4 062 354**
**US-A- 4 161 886**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Lombard, Claude**
**60, rue Corneille**
**F-78150 Le Chesnay (FR)**

(74) Mandataire : **Colas, Jean-Pierre et al**
**8 et 10 Avenue Emile Zola**
**F-92109 Boulogne-Billancourt (FR)**

Jouve, 18, rue St-Denis, 75001 Paris, France

## Description

La présente invention est relative à un capteur de pression absolue à variation d'inductance ou de fréquence.

On connaît déjà par le brevet CH-A-394 659 un capteur de pression absolue du type comprenant une enveloppe extérieure cylindrique fixe, un soufflet élastique enfermé dans l'enveloppe extérieure et présentant une première extrémité mobile par rapport à l'enveloppe et une seconde extrémité fixée à l'enveloppe, un circuit magnétique cuirassé en ferrite solidaire de l'enveloppe extérieure, un bobinage disposé à l'intérieur du circuit magnétique, un noyau magnétique mobile en ferrite solidaire de la première extrémité du soufflet et pouvant se déplacer dans le circuit magnétique et le bobinage en fonction des mouvements de ladite première extrémité, des moyens de réglage de la position du circuit magnétique par rapport au noyau, et des moyens pour appliquer le vide et la pression à mesurer respectivement à l'une et l'autre de deux chambres séparées de façon étanche par le soufflet et délimitées, d'une part, à l'intérieur du soufflet et, d'autre part, entre le soufflet et l'enveloppe extérieure.

Ce capteur présente malheureusement l'inconvénient de ne permettre le réglage que d'un seul paramètre agissant sur la relation existant entre la pression détectée et la grandeur électrique mesurée à la sortie du capteur.

Le brevet US-A-4 161 886 apporte une solution à ce problème au moyen d'un capteur de pression qui comporte des moyens pour régler à la fois la pente de la relation grandeur électrique de sortie/pression et le décalage du zéro de cette relation.

Toutefois, ce capteur est d'une construction relativement complexe et, comme celui décrit au brevet CH-A-394 659, il présente un encombrement important.

Le brevet US-A-4 062 354 décrit un capteur de pression dans lequel le noyau magnétique mobile et le bobinage sont logés à l'intérieur du soufflet, ce qui permet d'en réduire l'encombrement axial. Néanmoins, ce capteur ne comporte pas de moyens de réglage des paramètres précités.

La présente invention vise à éliminer les inconvénients des capteurs mentionnés ci-dessus en proposant une forme de réalisation d'un capteur absolu de pression du type précité, placée dans une perspective de construction économique au moyen de technologies bien connues, faciles à maîtriser et donnant de bons rendements de fabrication, tout en permettant un réglage aisé de paramètres agissant sur la relation grandeur de sortie/pression.

A cet effet, elle a pour objet, suivant la revendication 1, un capteur de pression absolue du type précité, caractérisé en ce que le noyau magnétique et le circuit magnétique sont disposés à l'intérieur du soufflet, et en ce que la deuxième extrémité du soufflet et le circuit magnétique sont fixés contre une embase de l'enveloppe extérieure dans laquelle sont prévues respectivement une première vis constituant le moyen de réglage de la position du circuit magnétique par rapport au noyau et une deuxième vis de réglage de la position axiale du bobinage par rapport au circuit magnétique.

Des modes de réalisation particuliers sont décrits dans les revendications 2 à 4.

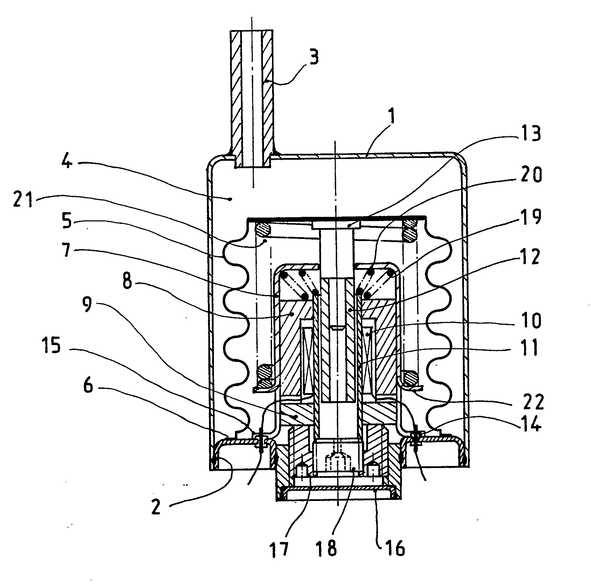

L'invention sera maintenant décrite en se référant à la figure unique annexée, qui est une vue en coupe d'un capteur terminé. Cette figure n'est pas limitative du mode de réalisation et n'est donnée qu'à titre d'exemple.

Suivant la représentation de la figure, une enveloppe extérieure étanche 1, fermée à son extrémité par une embase 2, est munie d'un conduit d'arrivée de pression 3 dans la chambre 4 délimitée par l'enveloppe 1, l'embase 2, un soufflet élastique étanche 5 soudé à l'embase 2 en 6. L'intérieur du soufflet est vidé d'air et forme une seconde chambre.

A l'intérieur du soufflet 5 se trouve un boîtier cylindrique 7, non étanche, fixé sur l'embase 2 et enfermant un circuit magnétique cuirassé constitué d'un tube épaulé en ferrite 8 et d'une rondelle 9.

A l'intérieur du circuit cuirassé se trouve un bobinage 10 de fil conducteur enroulé sur un tube 11, en matériau non magnétique et peu conducteur, centré à l'intérieur du circuit cuirassé.

Un noyau mobile en ferrite 12 est relié par une pièce intermédiaire 13 au soufflet 5 dont il suit les mouvements. Les extrémités du bobinage 10 sortent de la seconde chambre étanche par des perles de verre ou de céramique 14 et 15.

En son centre, l'embase 2, qui peut être composite, est obturée par une coupelle plus petite 16 soudée après réglage de deux vis concentriques 17 et 18 qui fixent respectivement la position du noyau 12 dans le circuit magnétique cuirassé et la position du bobinage 10 dans le circuit 8, 9. Le réglage des vis 17 et 18 permet de régler l'inductance ou la fréquence initiale d'une part et la pente de la caractéristique pression/inductance ou fréquence. A l'intérieur du boîtier 7 se trouvent deux ressorts coniques 19 et 20 servant respectivement à positionner le tube 11 contre la vis 18 et le circuit cuirassé contre la vis 17.

Un ressort 21 appuyé sur une découpe 22 du boîtier 7 permet de raidir le cas échéant le soufflet 5 pour l'adapter à des pressions plus élevées.

Le mode de réalisation décrit n'est pas uniquement limité à un soufflet à flexibilité latérale sur la paroi cylindrique, mais inclut d'autres formes équivalentes et notamment une flexibilité reportée à l'une des extrémités du cylindre au moins.

Le fonctionnement sera maintenant brièvement décrit : une variation de pression dans la chambre 4 fait varier la longueur du soufflet 5 et donc la position du noyau 12 par rapport au circuit cuirassé 8, 9, ce qui entraîne une variation de l'inductance de la bobine 10 et donc de la fréquence si cette bobine est connectée à un oscillateur non représenté.

Lorsque la pression croît dans la chambre 4, l'inductance croît et la fréquence décroît.

Le mode de construction décrit présente l'inconvénient de nécessiter des sorties étanches en 14 et 15, mais c'est en réalité un avantage car le bobinage et le noyau mobile, placés dans le vide, sont soustraits aux effets des poussières et des milieux corrosifs.

Dans tous les cas de construction, il n'est pas nécessaire de procéder au réglage du capteur sous vide. Il est suffisant d'appliquer une différence de pression de part et d'autre du soufflet 5. Par sécurité, l'étalonnage du capteur sera fait vide obtenu, pour pouvoir inclure le contrôle du mauvais vide, des contraintes de soudure, etc.

**Revendications**

1. Capteur de pression absolue comprenant une enveloppe extérieure cylindrique fixe (1), un soufflet élastique (5) enfermé dans l'enveloppe extérieure et présentant une première extrémité mobile par rapport à l'enveloppe et une seconde extrémité fixée à l'enveloppe, un circuit magnétique (8, 9) cuirassé en ferrite solidaire de l'enveloppe extérieure (1), un bobinage (10) disposé à l'intérieur du circuit magnétique (8, 9), un noyau magnétique (12) mobile en ferrite solidaire de la première extrémité du soufflet (5) et pouvant se déplacer dans le circuit magnétique et le bobinage en fonction des mouvements de ladite première extrémité, des moyens (17) de réglage de la position du circuit magnétique par rapport au noyau, et des moyens pour appliquer le vide et la pression à mesurer respectivement à l'une et l'autre de deux chambres séparées de façon étanche par le soufflet et délimitées, d'une part, à l'intérieur du soufflet et, d'autre part, entre le soufflet et l'enveloppe extérieure, caractérisé en ce que le noyau magnétique (12) et le circuit magnétique (8, 9) sont disposés à l'intérieur du soufflet (5), et en ce que la deuxième extrémité du soufflet et le circuit magnétique (8, 9) sont fixés contre une embase (2) de l'enveloppe extérieure dans laquelle sont prévues respectivement une première vis (17) constituant le moyen de réglage de la position du circuit magnétique par rapport au noyau et une deuxième vis (18) de réglage de la position axiale du bobinage (10) par rapport au circuit magnétique.

2. Capteur selon la revendication 1, caractérisé en ce que la chambre délimitée à l'intérieur du soufflet (5) et contenant le circuit magnétique (8, 9) et le noyau (12) est vidée d'air.

3. Capteur selon la revendication 1, caractérisé en ce que la chambre (4) délimitée entre le soufflet (5) et l'enveloppe extérieure (1) est vidée d'air.

4. Capteur selon l'une quelconque des revendications 1 à 3, caractérisé en ce que le bobinage (10) est enroulé sur un tube (11) en matériau non magnétique et peu conducteur, centré à l'intérieur du circuit magnétique, et en ce que, à l'intérieur d'un boîtier (7) entouré par le soufflet (5) et enfermant le circuit magnétique, sont disposés deux ressorts coniques (19) servant respectivement à positionner le tube (11) contre la deuxième vis de réglage (18) et le circuit magnétique (8, 9) contre la première vis de réglage (17).

**Claims**

1. An absolute pressure detector comprising a fixed cylindrical outside casing (1), a resilient bellows member (5) which is enclosed in the outside casing and which has a first end that is movable with respect to the casing and a second end that is fixed to the casing, a screened magnetic circuit (8, 9) of ferrite, which is fixed with respect to the outside casing (1), a coil (10) disposed within the magnetic circuit (8, 9), a movable magnetic core (12) of ferrite, which is fixed with respect to the first end of the bellows member (5) and which can move in the magnetic circuit and the coil in dependence on the movements of said first end, means (17) for regulating the position of the magnetic circuit with respect to the core, and means for applying vacuum and the pressure to be measured respectively to respective ones of two chambers which are sealingly separated by the bellows member and which are defined on the one hand within the bellows member and on the other hand between the bellows member and the outside casing, characterised in that the magnetic core (12) and the magnetic circuit (8, 9) are disposed within the bellows member (5), and that the second end of the bellows member and the magnetic circuit (8, 9) are fixed against a base (2) of the outside casing, in which there are respectively provided a first screw (17) forming the means for regulating the position of the magnetic circuit with respect to the core and a second screw (18) for regulating the axial position of the coil (10) with respect to the magnetic circuit.

2. A detector according to claim 1, characterised in that the air is exhausted from the chamber which is defined within the bellows member (5) and which contains the magnetic circuit (8, 9) and the core (12).

3. A detector according to claim 1, characterised in that the air is exhausted from the chamber (4) defined between the bellows member (5) and the outside casing (1).

4. A detector according to any one of claims 1 to 3, characterised in that the coil (10) is wound on a tube (11) of a non-magnetic material which is a poor conductor, that is centered within the magnetic circuit, and that disposed within a housing (7) surrounded by the bellows member (5) and containing the magnetic circuit are two conical springs (19) which serve respectively to position the tube (11) against the second regulating screw (18) and the magnetic circuit (8, 9) against the first regulating screw (17).

**Ansprüche**

1. Druckwandler, mit einem äußeren, festen, zylindrischen Gehäuse (1), mit einem elastischen Balg (5), der innerhalb des äußeren Gehäuses angeordnet ist und ein erstes, bezüglich des Gehäuses bewegliches Ende aufweist, sowie ein zweites, am Gehäuse befestigtes Ende aufweist, mit einem ummantelten magnetischen Kreis (8, 9) aus Ferrit, der mit dem äußeren Gehäuse (1) fest verbunden ist, mit einer Wicklung (10), die innerhalb des magnetischen Kreises (8, 9) angeordnet ist, mit einem beweglichen magnetischen Kern (12) aus Ferrit, der mit dem ersten Ende des Balges (5) fest verbunden ist und im magnetischen Kreis und in der Wicklung als Funktion der Bewegungen der ersten Endes verschiebbar ist, mit Mitteln (17) zur Einstellung der Position des magnetischen Kreises bezüglich des Kerns und mit Mitteln zum Anlegen eines Vakuums und des zu messenden Drucks an entsprechende zwei Kammern, die in dichter Weise durch den Balg voneinander getrennt sind und die einerseits von dem Innenraum des Balgs begrenzt sind und andererseits von dem Balg und dem äußeren Gehäuse begrenzt sind, dadurch gekennzeichnet, daß der magnetische Kern (12) und der magnetische Kreis (8, 9) innerhalb des Balgs (5) angeordnet sind, und daß das zweite Ende des Balgs und der magnetische Kreis (8, 9) an einem Fußstück (9) des äußeren Gehäuses befestigt sind, in dem eine erste Schraube (17) vorgesehen ist, die eine Einstellanordnung für die Position des magnetischen Kreises bezüglich des Kerns bildet und eine zweite Schraube (18) vorgesehen ist, zur Einstellung der axialen Position der Wicklung (10) bezüglich des magnetischen Kreises.

2. Druckwandler nach Anspruch 1, dadurch gekennzeichnet, daß die vom Innenraum des Balgs (5) begrenzte Kammer, die den magnetischen Kreis (8, 9) und den Kern (12) enthält, luftleer ist.

3. Druckwandler nach Anspruch 1, dadurch gekennzeichnet, daß die vom Balg (5) und dem äußeren Gehäuse (1) begrenzte Kammer (4) luftleer ist.

4. Druckwandler nach einem Ansprüche 1 bis 3, dadurch gekennzeichnet, daß die Wicklung (10) auf einem Rohr (11) aus nicht-magnetischem und wenig leitenden Material aufgewickelt ist, zum Inneren des magnetischen Kreises zentriert ist und daß im Inneren eines Gehäuses (7), das vom Balg (5) umgeben ist und magnetischen Kreis umschließt zwei konische Federn (19) angeordnet sind, die der Einstellung des Rohrs (11) bezüglich der zweiten Einstellschraube (18) bzw. des magnetischen Kreises (8, 9) bezüglich der ersten Einstellschraube (17) dienen.